# FASCICULE DE BREVET EUROPEEN

(11) **EP 2 114 841 B1**
(45) Date de publication et mention de la délivrance du brevet: **22.04.2020**
(21) Numéro de dépôt: 08761987.0
(22) Date de dépôt: 28.01.2008
(51) Int. Cl.: C04B 35/573, C04B 38/00

(54) **PROCÉDÉ DE FABRICATION D'UN CORPS POREUX CÉRAMIQUE À BASE DE SIC**
VERFAHREN ZUR HERSTELLUNG EINES PORÖSEN KERAMIKKÖRPERS AUF SIC-BASIS
METHOD FOR MAKING A SIC BASED CERAMIC POROUS BODY

(30) Priorité: 29.01.2007 FR 0752927
(43) Date de publication de la demande: 11.11.2009
(73) Titulaire: Saint-Gobain Centre de Recherches et d'Etudes Européen, 92400 Courbevoie (FR)
(72) Inventeur: BOUSSANT-ROUX, Yves Marcel Léon, 84140 Montfavet (FR); POPA, Ana-Maria, 84300 Cavaillon (FR); HARTLINE, Stephen D., Shrewsbury, Massachusetts 01545 (US); MOSBY, Jostein, 4619 Mosby (NO); VELKEN, Sjur Vidar, 4626 Kristiansand (NO)
(74) Mandataire: Saint-Gobain Recherche
(86) Numéro de dépôt international: PCT/FR2008/050122
(87) Numéro de publication internationale: WO 2008/104656

(56) Documents cités:
- EP-A- 1 666 433
- EP-A1- 0 147 478
- WO-A-93/25495
- WO-A-96/26910
- WO-A-03/022779
- WO-A1-2006/025498
- US-A1- 2006 179 803
- US-A1- 2006 228 521

## Description

La présente invention se rapporte au domaine des matériaux poreux à base de carbure de silicium, en particulier de carbure de silicium recristallisé. Plus particulièrement, l'invention se rapporte à un procédé de fabrication d'un corps ou un élément constitué d'un tel matériau poreux et dont les caractéristiques de porosité, de taille de pores et de résistance mécanique sont améliorées. Un tel corps ou élément peut notamment être utilisé dans le domaine de la filtration ou des supports de cuisson ou des allumeurs céramiques par exemple.

Les matériaux céramiques ou réfractaires poreux à base de carbure de silicium ou SiC obtenus par frittage à haute température sont de plus en plus utilisés dans des applications où leur forte inertie chimique et leur réfractarité élevée leur permettent de résister à des sollicitations mécaniques importantes, en particulier thermomécaniques. Des exemples importants mais non limitatifs sont typiquement des applications comme le filtre à particules dans des lignes d'échappement de véhicules automobiles. Par exemple, l'augmentation de la porosité et en particulier de la taille moyenne des pores est ainsi en général recherchée pour les applications de traitement de filtration catalytique des gaz, le dépôt du revêtement catalytique au sein du matériau poreux étant rendu possible par le fait que le matériau présente, après ledit dépôt, une porosité encore suffisante pour permettre la traversée des gaz sans perte de charge excessive.

Cependant, il a été observé, sur les corps poreux constitués par de tels matériaux, des variations locales significatives de distribution de pores et de résistance mécanique. De tels défauts peuvent notamment apparaître en raison de variations locales de la température en certains points de l'élément lors de sa fabrication, ces variations étant inhérentes à tout procédé de cuisson haute température et donc très difficilement contrôlables. Lorsque le matériau est fortement poreux, c'est-à-dire quand sa porosité ouverte est supérieure à 40%, voire 45% ou même 50%, ce phénomène est encore accentué et des zones de plus faible résistance mécanique et/ou thermomécanique peuvent être à l'origine d'une détérioration rapide du matériau en service.

De façon identique pour un matériau destiné par exemple à être utilisé comme support de cuisson, il est important de maîtriser au mieux la porosité afin de diminuer la masse thermique du support tout en préservant ses caractéristiques mécaniques et thermomécaniques.

En outre, de fortes variations de la distribution de tailles de pores dans le matériau constituant l'élément ont par ailleurs un effet néfaste dans les applications de filtration de gaz ou de liquides car la perte de charge lors de la traversée de l'élément par le fluide est alors mal maîtrisée.

De même, une distribution de taille de pores non maîtrisée peut constituer un défaut critique qui limitera la durée de vie d'un support de cuisson.

Afin de mieux maîtriser la microstructure et l'homogénéité d'un matériau poreux, le moyen le plus classique connu consiste à utiliser un porogène le plus souvent d'origine organique, qui se décompose lors d'une étape de chauffage ou de la cuisson du matériau. Un tel procédé est par exemple décrit dans la demande EP 1 403 231. De façon connue, l'utilisation de porogène conduit cependant à dégager des gaz toxiques et peut en outre provoquer des défauts dans le matériau tels que des micro-fissurations si l'élimination du porogène n'est pas parfaitement contrôlée. De tels défauts peuvent être très dommageables ensuite pour les propriétés et la résistance des corps poreux lors de leur utilisation, tout particulièrement pour des filtres à particules dans une ligne d'échappement, soumis à des phases successives de filtration et de régénération ou pour un support de cuisson qui devra subir plusieurs cycles thermiques importants.

La dispersion de ces agents porogènes dans le mélange préalable servant à la mise en forme du corps poreux est encore plus problématique lorsque la quantité de porogène ajoutée dépasse quelques pourcents poids du mélange total initial, c'est-à-dire en particulier lorsqu'un produit fortement poreux, au sens précédemment décrit, est recherché. Dans le cas particulier des céramiques constituées essentiellement de SiC obtenu par recristallisation entre 1900 et 2300°C environ, il a en outre été observé que la présence de résidus liés à la décomposition du porogène tel que du carbone résiduel conduisait à une consolidation imparfaite du matériau poreux lors de la cuisson.

D'un autre côté, il est aussi connu, pour accroître le diamètre moyen de pores du produit final, d'augmenter la taille des particules de SiC présentes dans le mélange de départ. L'utilisation de particules de grande taille, c'est-à-dire typiquement dont le diamètre médian est supérieur à 20 microns, conduit cependant à une diminution du volume de pores et, dans des conditions de cuisson équivalente, à une chute assez rapide des propriétés mécaniques de l'élément après cuisson. Par ailleurs il devient difficile, voire impossible, de déterminer une température de cuisson permettant de conserver à la fois un volume de pores, une distribution de tailles de pores et une résistance mécanique convenant à des applications telles que, par exemple, la filtration de gaz chauds dans une ligne d'échappement automobile.
Il existe donc un besoin pour un matériau poreux présentant d'une part un meilleur compromis en terme de diamètre de pores, de volume de porosité et de résistance mécanique, et d'autre part une variation plus faible de sa taille médiane de pores et de sa résistance mécanique, en fonction de la température de cuisson.
La publication WO2006/0254898 divulgue un procédé de fabrication d'un produit céramique poreux à base de SIC par frittage de particules de SiC de différentes tailles.

Le but de la présente invention est de fournir un tel matériau poreux présentant un compromis amélioré entre sa résistance mécanique et son degré de porosité. Plus particulièrement le but de l'invention est de proposer un nouveau procédé de fabrication d'un produit céramique ou réfractaire poreux à base de SiC, fritté à une température supérieure à 1600°C, permettant l'obtention d'un matériau présentant un compromis amélioré, par rapport aux procédés connus à ce jour, entre ses propriétés de porosité, en particulier sa porosité ouverte et/ou son diamètre médian de pores et ses propriétés de résistance mécanique.

Plus précisément, l'invention concerne un procédé de fabrication d'un corps poreux à base de SiC fritté, comprenant les étapes suivantes :
a) mélange d'une première poudre de particules de SiC, dont le diamètre médian est inférieur à 20 µm, dans un solvant tel que l'eau et en présence d'un liant,
b) agglomération desdits particules pour constituer des granules dont la taille moyenne est comprise entre 5 et 500 µm,
c) mélange des granules issus de l'étape b) avec une deuxième poudre de particules de SiC dont le diamètre médian est supérieur à 5 µm et au moins deux fois supérieur à celui de la première poudre, en présence d'un solvant tel que l'eau et d'un liant, dans des proportions adaptées pour permettre la mise en forme du mélange,
d) mise en forme du mélange obtenu lors de l'étape c) pour obtenir un corps cru,
e) élimination du solvant et/ou des liants par traitement thermique et/ou par utilisation de micro-ondes,
f) cuisson du corps à une température de frittage comprise entre 1600°C et 2400°C, de préférence supérieure à 1700°C, voire supérieure à 1900°C, pour obtenir un corps poreux fritté.

Le procédé selon l'invention consiste donc à agglomérer dans une étape préalable les plus fines particules de SiC, puis à ajouter dans une seconde étape les granules ainsi obtenus à une poudre de SiC présentant des particules de plus grande taille, et permet avantageusement d'obtenir, après cuisson et frittage à haute température, un produit céramique réfractaire poreux à base de SiC dont les caractéristiques de porosité et de résistance mécanique sont améliorées et peuvent être plus facilement contrôlées. Ainsi, le procédé selon l'invention permet l'obtention d'un corps fritté poreux dont une résistance mécanique relativement élevée est garantie, quelque soit la valeur désirée de sa porosité.

Avantageusement, le diamètre médian des particules de la première poudre de SiC est inférieur à 10 microns et de préférence inférieur à 5 µm, voire inférieur à 1µm. Sans sortir du cadre de l'invention, le diamètre médian des particules de la première poudre de SiC peut être de l'ordre de quelques dizaines de nanomètres, voire de l'ordre de quelques nanomètres, par exemple de l'ordre de 1 à 100 nm.

Selon un mode possible de réalisation de la présente invention, ladite première poudre de SiC peut être constituée de plusieurs fractions différant par le diamètre médian des particules les constituant. Par exemple, une des fractions constituant la première poudre peut être constituée de particules dont le diamètre médian est de l'ordre de 1 à 20 microns et une autre fraction constituée de particules de taille nanométrique, au sens précédemment décrit.

Le diamètre médian des particules constituant la deuxième poudre de SiC peut être compris entre 5 et 50 µm, et de préférence compris entre 5 et 20 µm. En dessous de 5 µm, il n'a été observé de différence significative par rapport à des matériaux poreux obtenus selon les procédés classiques. Au dessus de 50 µm, la résistance mécanique du corps poreux chute très fortement.

Par exemple, dans un procédé selon l'invention, le diamètre médian des particules de SiC de la deuxième poudre est au moins cinq fois supérieur au diamètre médian des particules de SiC de la première poudre et de préférence au moins dix fois supérieur.

Typiquement, l'étape b) d'agglomération est effectuée dans des conditions permettant l'obtention de granules dont la taille moyenne est comprise entre 5 et 200 µm, de préférence entre 10 et 100 µm et de manière très préférée entre 10 et 50 µm. Lorsque la taille des granules est trop faible, aucun effet technique n'a été observé. Lorsque la taille moyenne des granules dépasse 200 µm, par exemple jusqu'à 500 µm, la résistance mécanique du produit poreux final devient significativement plus faible, la diminution de la résistance mécanique à la rupture en flexion observée étant de l'ordre de 5 à 10 MPa.

En général, dans le mélange de l'étape c), la fraction de granules représente entre 95 et 5% poids du mélange sec et de préférence entre 90 et 10% poids du mélange sec.

Notamment afin d'augmenter les propriétés de conductivité électrique du corps poreux ou de renforcer la résistance mécanique du corps poreux, la poudre de SiC peut être du SiC dopé par de l'Aluminium.

Typiquement, le liant utilisé pour la fabrication des granules, en particulier lors des étapes a) et/ou c) est par exemple une résine thermodurcissable choisie parmi les résines époxyde, silicone, polyimide, polyester ou de préférence la résine phénolique, un PVA ou une résine acrylique de préférence choisies pour des raisons liées au respect de l'environnement. La nature du liant et sa quantité sont en général choisies en fonction de la granulométrie des poudres de particules fines de SiC de départ et de la taille souhaitée de granules de SiC obtenus après agglomération. Le liant doit permettre d'assurer une tenue mécanique suffisante pour que les granules ne soient pas dégradés avant le traitement thermique de déliantage (étape e)) et en particulier lors de la mise en forme (étape d)).

Le liant du type résine acrylique a par exemple l'avantage de conduire à une barbotine de SiC avant agglomération des granules de faible viscosité, à composition de granules et procédé d'agglomération identiques, et conduit par la suite à des granules très homogènes présentant notamment une meilleure cohésion sous l'effet des contraintes de mise en forme du mélange avec un solvant tel que l'eau lors de l'étape c) du présent procédé. Ceci présente un avantage particulier par exemple lorsque les granules comportent des germes constitués par les grains d'une troisième poudre de particules de SiC de diamètre supérieur à celui de la première poudre de SiC mais inférieur à celui de la deuxième poudre de SiC, telles que définies précédemment. Le liant organique peut aussi selon l'invention être associé à un liant de type minéral ou organo-minéral comprenant typiquement un élément tel que l'aluminium et/ou le silicium. Dans certaines réalisations de l'invention, on pourra également n'utiliser qu'un liant de type minéral ou organo-minéral. En présence de tels liants et lorsque le traitement thermique est effectué sous atmosphère oxydante, le traitement thermique est alors adapté selon des techniques de routine pour limiter l'oxydation des plus fines particules de SiC.
Selon l'invention, il est également possible d'ajouter des dispersants ou des défloculants au liant dans les étapes a) et/ou c).
Ces dispersants ou défloculants ont pour fonction d'éviter l'agglomération des poudres dans la suspension, avant par exemple le traitement thermique permettant l'élimination du solvant. Selon l'invention il est possible d'utiliser tous les dispersants connus, du type ioniques purs, par exemple les polyphosphates métalliques ou du type à effet stérique seulement, par exemple les polyméthacrylates de sodium ou combinant les deux fonctions dès lors que leur quantité reste faible par rapport à la quantité de particules de SiC (c'est-à-dire typiquement moins de 1 % de la masse des particules). Sans sortir du cadre de l'invention, les granules peuvent aussi comporter des additifs de frittage tels que par exemple dans le groupe du Si et/ou de l'Aluminium et/ou du Bore et/ou une poudre de carbone et/ou d'autres poudres par exemple à base d'oxydes réfractaires ou de métaux alcalins ou de terres rares. Ces additifs peuvent contribuer à augmenter la cohésion des granules après traitement thermique et avant ajout dans le mélange de fabrication du corps poreux et contribuer à l'amélioration des caractéristiques mécaniques du corps poreux. Un additif de type AlN, avec ou sans traitement thermique préalable des granules, est un additif préféré. Un additif de type fumée de silice, avec ou sans traitement thermique préalable des granules, est également un additif préféré.
Typiquement l'étape b) d'agglomération peut être mise en œuvre :
- de préférence par atomisation ou un autre procédé faisant intervenir une pulvérisation au travers d'au moins une buse d'une suspension colloïdale (ou barbotine) au sein d'un contenant dans lequel est insufflé un jet d'air chaud ou de gaz inerte sous pression, de manière à obtenir des agrégats homogènes de grains de poudre céramique enrobés par des produits organiques,
- par granulation, l'agglomération des grains de poudre céramique se réalisant par malaxage et séchage d'un mélange humide au sein d'un malaxeur.

En particulier dans le cas de l'atomisation, des paramètres tels que la taille, et notamment le diamètre de la buse d'entrée de la barbotine et du fluide de séchage, la pression du jet du fluide de séchage et l'injection de la barbotine, la vitesse de la rotation des buses lorsque celles-ci sont mobiles, seront réglées selon les techniques de l'art bien connues dans le domaine pour ajuster la forme, la taille moyenne et la distribution de taille des granules recherchée.

De préférence, les granules utilisés au cours de l'étape c) sont sélectionnés afin que leur population présente une dispersion de taille relativement étroite autour d'une taille moyenne. Cette sélection est par exemple effectuée grâce à un procédé de sélection par criblage ou classification des granules, après leur procédé de fabrication. Il a en effet été observé par le demandeur qu'une taille de granules pas ou peu dispersée autour d'une valeur moyenne conduisait au final à l'obtention d'un produit plus homogène en terme de microstructure, offrant de meilleures caractéristiques de porosité et de résistance mécanique. Par exemple, l'écart type autour de la valeur médiane des diamètres de particules de la fraction, est de l'ordre au maximum de 15%.

Les granules sont de préférence poreux et de porosité comprise entre 5 et 95 %. Après séchage et/ou traitement thermique, les granules selon l'invention présentent avantageusement une teneur d'humidité résiduelle inférieure à 1%. Selon l'invention, dans le mélange de l'étape c), la fraction de granules représente entre 95 et 5% poids et de préférence entre 90 et 10% poids du mélange sec. La masse de granules est typiquement comprise entre 5 et 100 % en poids du mélange (mesuré sur un échantillon sec) avant la mise en forme (étape d)).

Lors de l'étape c), des agents liants et/ou plastifiants peuvent être ajoutés. Ceux-ci sont par exemple choisis parmi la gamme des polysaccharides et dérivés de celluloses, les PVA, les PEG, voire des dérivés de lignones ou des agents de prise chimique tels que l'acide phosphorique ou le silicate de soude dès lors que ceux-ci sont compatibles avec le procédé de cuisson. Le demandeur a observé que la rhéologie du mélange plastique ainsi obtenu pouvait être facilement contrôlée par des expérimentations de routine, y compris pour des ajouts d'eau conséquents. Bien que cela ne soit pas nécessaire selon l'invention, il est possible d'ajouter au mélange des porogènes, mais dont la quantité est fortement réduite par rapport aux procédés de l'art antérieur.

La mise en forme du produit poreux (étape d)) est réalisée de préférence de manière à réaliser des pièces de forme variées selon toute technique connue, par exemple par pressage, extrusion, vibration et/ou moulage, par coulage sous pression ou non par exemple en moule poreux plâtre ou résine. La taille des granules et de la fraction de particules de SiC constituant la deuxième poudre est adaptée selon les techniques en vigueur à l'épaisseur de la pièce à réaliser de manière à assurer les propriétés de porosité, de résistance mécanique et d'aspect nécessaires pour l'application recherchée. En outre, il a été observé que la réduction du taux de fines, agglomérées sous forme de granules selon l'invention, permettait d'éviter le bouchage des moules lors d'un coulage ou réduisait les effets de délamination dans le cas des mélanges de pressage.

L'élimination du solvant au cours de l'étape e) peut être obtenu par un traitement thermique ou alternativement par l'utilisation de micro-ondes, pendant un temps suffisant pour amener la teneur en eau non liée chimiquement à moins de 1 % en masse. Bien entendu, d'autres moyens équivalents connus peuvent être envisagés sans sortir du cadre de la présente invention.

L'élimination du liant ou déliantage (étape e) est effectuée de préférence sous air et à une température de préférence inférieure à 700°C, de manière à assurer une tenue mécanique suffisante avant le frittage et éviter une oxydation incontrôlée du SiC.

La cuisson est réalisée à haute température, c'est-à-dire à une température supérieure à 1600°C, de préférence supérieure à 2100°C mais inférieure à 2400°C. De préférence, ladite cuisson est menée sous atmosphère non oxydante, par exemple d'Argon.

Un corps poreux en Sic recristallisé, sous forme essentiellement a, peut être obtenu par un procédé tel que précédemment exposé et utilisé comme structure d'un filtre à particules dans une ligne d'échappement d'un moteur diesel ou essence ou comme support de cuisson ou allumeur céramique.

Par comparaison avec un corps poreux de même forme et dont les caractéristiques de porosité sont comparables, mais obtenu selon un procédé antérieur dans lequel la porosité est obtenue exclusivement par des ajouts de porogène, le corps poreux réalisé selon le présent procédé, incluant une étape de granulation pouvant être menée sans apport de porogène, présente les avantages suivants:
- une valeur caractéristique MOR×PO (module de rupture en flexion multiplié par le volume de porosité ouverte) plus élevée traduisant un meilleur compromis entre les propriétés de porosité et les propriétés de résistance mécanique,
- un diamètre de pores médian et une résistance mécanique variant moins fortement en fonction de la température finale de la cuisson.

Par comparaison maintenant avec un corps poreux de même forme, de porosité similaire obtenu par un procédé dans lequel la forte porosité est obtenue par l'introduction dans le mélange initial d'une fraction de particules de plus grande taille, sans ajout de porogène, le corps poreux obtenu selon le présent procédé présente des caractéristiques de résistance mécanique significativement plus fortes. De façon décisive, on observe que la valeur du produit MOR×PO (module de rupture en flexion multiplié par le volume de porosité ouverte), qui traduit un meilleur compromis entre résistance mécanique et porosité, est également beaucoup plus élevée pour le corps poreux obtenu selon l'invention. Il a été aussi observé, dans le cas plus spécifique des produits céramiques SiC obtenus par recristallisation, que l'usage de granules obtenus par agglomération des plus fines particules de SiC, associé à l'utilisation d'une fraction de particules de SiC de plus grosse taille, permettait d'augmenter et de contrôler la porosité ouverte et le diamètre médian de pores, tout en maintenant la résistance mécanique du matériau.

Les avantages décrits précédemment sont illustrés par les exemples non limitatifs qui suivent, illustrant certains modes de réalisation de l'invention. Les exemples qui suivent permettent une comparaison avec les produits obtenus selon les procédés antérieurs.

Plus particulièrement, les exemples 1, 2, 3 et 2bis illustrent des exemples comparatifs. Les exemples 4 à 12 sont des exemples selon l'invention.
Dans tous les exemples, les granules ont été préparés à partir d'un mélange de 50% en poids d'une poudre de carbure de silicium de diamètre médian de 0,5µm et 50% en poids d'eau, auquel a été ajouté 5% en masse de PVA.
Dans le cas particulier de l'exemple 11 les granules D ont été réalisés avec une poudre de carbure de silicium dopée à 1% d'Al. Dans le cas particulier de l'exemple 12, 8% en poids, exprimé en pourcentage de la teneur massique totale en carbure de Silicium des granules, a été substituée par une poudre de carbure de Silicium de taille nanométrique présentant une surface spécifique de 60m²/g.
La température de l'air chaud de l'atomiseur utilisé pour l'étape de granulation a été réglée à 180°C tandis que la température des gaz au niveau de l'extraction était de 80°C. Le débit d'air était de 3000Nm³/h. Le diamètre de la buse de pulvérisation de la barbotine était de 1mm pour une pression d'injection de 30 bars. Les granules produits sont de forme quasiment sphérique et présentent une taille moyenne de 100µm environ. Une classification par tamisage vibrant a permis de sélectionner trois fractions granulométriques différentes, de diamètres moyens sensiblement égaux à 20µm (fractions A, D, E), 30µm (fraction B) et 45µm (fraction C).

Les mélanges ont été réalisés selon les compositions massiques précisées dans le tableau 2 ci-joint avec différentes tailles moyennes de granules, différents diamètres médians de poudres de SiC, avec un ajout de liant plastifiant de type methylcellulose, et selon les cas avec un ajout de porogène organique de type polyéthylène. Les mélanges ont malaxés pendant 10 minutes en présence d'eau dans un malaxeur jusqu'à l'obtention d'une pâte homogène. La pâte est étirée pendant 30 minutes afin de rendre la pâte plastique et permettre la désaération du mélange.
Les ajouts d'eau, de porogène et de liant-plastifiant sont exprimés dans le tableau 1 par rapport à la masse de mélange sec.
Dans le cadre des exemples 1 et 4, des barrettes ont été extrudées au moyen d'une filière de forme rectangulaire de dimensions intérieures sensiblement de 6mm et 8mm, de manière à réaliser des pièces parallélépipédiques de 6mm×8mm×60mm.
Dans le cadre des autres exemples, des monolithes en forme de nid d'abeille ont été extrudés au moyen d'une filière de forme adaptée permettant d'obtenir les caractéristiques dimensionnelles de la structure après extrusion selon le tableau 1 suivant :

**Tableau 1**

| | |
|---|---|
| Géométrie des canaux et du monolithe | carrée |
| Densité de canaux | 180 cpsi (canaux par inch carré, 1 inch = 2,54 cm,) soit 27,9 canaux/cm² |
| Epaisseur des parois interne | 350 µm |
| Epaisseur de parois externe moyenne | 600µm |
| Longueur | 17,4 cm |
| Largeur | 3,6cm |

Selon les techniques de l'art, par exemple décrites dans les brevets EP 1 403 231, EP 816 065, EP 1 142 619, EP 1 455 923 ou encore WO 2004/090294, ces produits extrudés ont été séchés à 110°C, déliantés à 600°C/air et cuits sous Argon à haute température selon un palier de 6h.
Des caractéristiques de porosité et de résistance mécanique ont été déterminées sur des barrettes ou des monolithes et sont exprimées dans le tableau 2 en fonction de la température maximale de cuisson.
La porosité ouverte est mesurée sur les barrettes et les monolithes extrudés en forme de nid d'abeille par immersion et vide selon la norme ISO5017. Le diamètre médian de pores est mesuré par porométrie au mercure.
La force à la rupture MOR est mesurée à température ambiante pour chaque exemple sur 10 éprouvettes correspondant à des éléments unitaires (monolithes) d'un même lot de fabrication de dimensions 17,4 cm de longueur et 36mm de largeur. Le montage en flexion 4 points est réalisé avec une distance de 150 mm entre les deux appuis inférieurs et une distance de 75 mm entre les deux poinçons supérieurs typiquement selon la norme ASTM C1161-02.c. Des caoutchoucs sont placés sur les poinçons afin d'éviter une initiation de fissures par compression sur la face supérieure de l'éprouvette, ce qui pourrait perturber la qualité des mesures. La vitesse de descente du poinçon est constante de l'ordre de 10mm/min.
La force à la rupture sur barrettes est mesurée sur des échantillons extrudés de dimensions 6×8mm² et de longueur 60 mm en flexion 3 points selon la norme ISO5014. Les principales caractéristiques et résultats obtenus pour les filtres selon les exemples 1 à 12 sont regroupés dans le tableau 2.

La comparaison des exemples 4 et 1 montre une amélioration significative du compromis résistance/porosité, mesuré par le facteur (MOR×PO) ainsi qu'une variation moindre des caractéristiques de porosité, de diamètre médian de pores et de résistance mécanique en fonction de la température de cuisson, lorsque qu'un procédé selon l'invention est mis en œuvre.
La comparaison des exemples 5 et 3 montre qu'un meilleur compromis porosité/résistance mécanique est obtenu lorsqu'un procédé selon l'invention est utilisé, par rapport à un procédé antérieur incluant l'utilisation de fortes quantités de porogènes.
La composition de référence 2 ne permet pas d'obtenir un produit céramique de forte porosité, la porosité ouverte étant inférieure à 40%.
Les exemples 5, 5bis, 6 et 7 montrent des variantes de l'invention en fonction de la taille de granules et de la composition granulométrique.
L'exemple 8 montre, de façon surprenante et par comparaison avec l'exemple 2bis, que la résistance mécanique des corps poreux obtenu selon l'invention peut être sensiblement maintenue, même si la taille des particules de SiC constituant la deuxième poudre est augmentée. Les résultats des tests de l'exemple 8, reportés dans le tableau ci-joint montrent en particulier qu'un diamètre moyen de pore très important peut être obtenu selon l'invention sans dégradation sensible des propriétés mécaniques du corps poreux.
Les exemples 9 et 10 montrent qu'une proportion élevée de granules selon l'invention permet d'obtenir un produit dont la porosité est très élevée tout en maintenant une résistance mécanique satisfaisante.
Les exemples 11 et 12 permettent d'obtenir des monolithes avec des propriétés sensiblement similaires à l'exemple 5bis, mais à une température de cuisson plus faible.

**Tableau 2**

| | référence | invention | référence | référence | invention | invention | invention | invention | référence | invention | invention | invention | invention | invention |
|---|---|---|---|---|---|---|---|---|---|---|---|---|---|---|
| | 1 | 4 | 2 | 3 | 5 | 5 bis | 6 | 7 | 2 bis | 8 | 9 | 10 | 11 | 12 |
| compositions massiques | mélange sans granules avec PFA | mélange avec granules , **sans PFA** | mélange sans granules , **sans PFA** | mélange sans granules avec PFA | mélange avec granules **sans PFA** | mélange avec granules **sans PFA** | mélange avec granules **sans PFA** | mélange avec granules , **sans PFA** | mélange sans granules sans PFA | mélange avec granules **sans PFA** | mélange avec granules **sans PFA** | mélange avec granules **sans PFA** | mélange avec granules **sans PFA** | mélange avec granules, **sans PFA** |
| | barettes | barettes | monolithe | monolithe | monolithe | monolithe | monolithe | monolithe | monolithe | monolithe | monolithe | monolithe | monolithe | monolithe |
| poudre de SiC d₅₀=35µm | | | | | | | | | 70 | 70 | | | | |
| poudre de SiC d₅₀=10µm | 70 | 70 | 70 | 70 | 70 | 70 | 70 | 50 | | | 25 | 25 | 70 | 70 |
| fines SiC d₅₀=0,5µm | 30 | | 30 | 30 | 10 | 10 | 10 | 20 | 30 | 10 | 10 | 10 | 10 | 10 |
| fines de SiC, granules A (taille moyenne-20µm) | | 30 | | | | 20 | | | | | | | | |
| fines de SiC, granules B (taille moyenne=30µm) | | | | | 20 | | | | | | 65 | | | |
| fines de SiC, granules C (taille moyenne=45µm) | | | | | | | 20 | 30 | | 20 | | 65 | | |
| fines de SiC, granules D avec SiC dopé Al (taille moyenne=20µm) | | | | | | | | | | | | | 20 | |
| fines de SiC, granules E avec ajout de poudre nano (taille moyenne =20µm) | | | | | | | | | | | | | | 20 |
| porogene de type polyethylène D₅₀=25µm | +5 | | | +5 | | | | | | | | | | |
| additif de mise en forme de type methycellulose | +10 | +10 | +10 | +10 | +10 | +10 | +10 | +10 | +10 | +10 | +10 | +10 | +10 | +10 |
| ajout d'eau% | +22 | +22 | +22 | +22 | +20 | +21 | +25 | +20 | +28 | +23 | +24 | +25 | +23 | +24 |
| après cuisson 2000°C/Ar/6h | | | | | | | | | | | | | | |
| PO % ( PO=porosité) | 46,5 | 49 | | | | | | | | | | | 46 | 45,5 |
| D50 des pores µm | 6,5 | 8,7 | | | | | | | | | | | 9 | 9,5 |
| MOR (MPa) | 20 | 24 | | | | | | | | | | | 30 | 29 |
| MOR*PO (Mpa.%) | 977 | 1205 | | | | | | | | | | | 1380 | 1320 |
| après cuisson 2100°C/Ar/6h | | | | | | | | | | | | | | |
| PO % | 49 | 50,6 | 35 | 46 | 42 | 45 | 45 | 49 | 37 | 47 | 61 | 60 | | |
| D₅₀ des pores µm | 12,5 | 14,0 | 10,0 | 14,0 | 12,0 | 13,0 | 15,0 | 17,0 | 35,0 | 41,0 | 23,5 | 24,0 | | |
| MOR (MPa) | 25 | 30 | 22 | 18 | 25 | 23 | 20 | 21 | 7 | 20 | 29 | 27 | | |
| MOR*PO (Mpa.%) | 1225 | 1518 | 770 | 828 | 1050 | 1035 | 900 | 1029 | 259 | 940 | 1769 | 1620 | | |
| après cuisson 2200°C/Ar/6h | | | | | | | | | | | | | | |
| PO % | 51 | 51 | | | | | | | | | | | | |
| D₅₀ des pores µm | 19,0 | 23,1 | | | | | | | | | | | | |
| MOR (MPa) | 34 | 35 | | | | | | | | | | | | |
| MOR*PO (Mpa.%) | 1734 | 1785 | | | | | | | | | | | | |
| variation en fonction de la température de cuisson | | | | | | | | | | | | | | |
| moyenne de PO % | 48.8 | 50,2 | | | | | | | | | | | | |
| moyenne de D₅₀ des pores µm | 12,7 | 15,3 | | | | | | | | | | | | |

## Revendications

1. Procédé de fabrication d'un produit céramique réfractaire poreux à base de SiC fritté, comprenant les étapes suivantes :
a) mélange d'une première poudre de particules de SiC, dont le diamètre médian est inférieur à 20 µm, dans un solvant tel que l'eau et en présence d'un liant,
b) agglomération desdits particules pour constituer des granules dont la taille moyenne est comprise entre 5 et 500 µm,
c) mélange des granules issus de l'étape b) avec une deuxième poudre de particules de SiC dont le diamètre médian est supérieur à 5 µm et au moins deux fois supérieur à celui de la première poudre et en présence d'un solvant tel que l'eau et d'un liant, dans des proportions adaptées pour permettre la mise en forme du mélange,
d) mise en forme du mélange obtenu lors de l'étape c) pour obtenir un corps cru,
e) élimination du solvant et/ou des liants par traitement thermique et/ou par utilisation de micro-ondes,
f) cuisson du corps à une température de frittage comprise entre 1600°C et 2400°C pour obtenir un corps poreux fritté.

2. Procédé selon la revendication 1, dans lequel le diamètre médian des particules de la première poudre de SiC est inférieur à 10 microns de préférence inférieur à 5 µm, et de manière très préférée inférieur à 1 µm.

3. Procédé selon l'une des revendications précédentes, dans lequel le diamètre médian des particules de la deuxième poudre de SiC est compris entre 5 et 50µm et de préférence compris entre 5 et 20µm.

4. Procédé selon l'une des revendications précédentes, dans lequel le diamètre médian des particules de SiC de la deuxième poudre est au moins cinq fois supérieur au diamètre médian des particules de SiC de la première poudre et de préférence au moins dix fois supérieur.

5. Procédé selon l'une des revendications précédentes, dans lequel l'étape b) d'agglomération est effectuée dans des conditions permettant l'obtention de granules dont la taille est comprise entre 5 et 200 µm, de préférence entre 10 et 100 µm et de manière très préférée entre 10 et 50 µm.

6. Procédé selon l'une des revendications précédentes, dans lequel, dans le mélange de l'étape c), la fraction de granules représente entre 95 et 5% poids du mélange sec et de préférence entre 90 et 10% poids du mélange sec.

7. Procédé selon l'une des revendications précédentes, dans lequel ladite première poudre de SiC est constituée de plusieurs fractions différant par le diamètre médian des particules les constituant, une des fractions étant constituée de particules dont le diamètre médian est de l'ordre de 1 à 20 microns et une autre fraction étant constituée de particules de taille nanométrique.

8. Procédé selon l'une des revendications précédentes, dans lequel le liant utilisé lors des étapes a) ou c) est choisi dans le groupe constitué par les résines thermodurcissables, en particulier les résines époxyde, silicone, polyimide, polyester ou de préférence une résine phénolique, les PVA éventuellement associés à des liants du type minéral ou organo-minéral ou une résine acrylique.

9. Procédé selon l'une des revendications précédentes, dans lequel des dispersants ou des défloculants sont ajoutés au liant dans les étapes a) et/ou c).

10. Procédé selon l'une des revendications précédentes, dans lequel l'étape b) d'agglomération est mise en œuvre par atomisation ou par granulation.

11. Procédé selon l'une des revendications précédentes, dans lequel la mise en forme du corps cru lors de l'étape d) est obtenue par pressage, extrusion, vibration ou par moulage, coulage sous pression ou non par exemple en moule poreux plâtre ou résine.

## Patentansprüche

1. Verfahren zur Herstellung eines porösen feuerfesten Keramikprodukts auf Basis von gesintertem SiC, umfassend die folgenden Schritte:
a) Mischen eines ersten Pulvers aus SiC-Partikeln, deren mittlerer Durchmesser weniger als 20 µm beträgt, in einem Lösungsmittel wie Wasser und in Gegenwart eines Bindemittels,
b) Agglomerieren der Partikel zu Granulaten mit einer mittleren Größe zwischen 5 und 500 µm,
c) Mischen der aus Schritt b) resultierenden Granulate mit einem zweiten Pulver aus SiC-Partikeln, deren mittlerer Durchmesser größer als 5 µm und mindestens doppelt so groß wie der des ersten Pulvers ist, und in Gegenwart eines Lösungsmittels wie Wasser und eines Bindemittels in anteiligen Verhältnissen, die das Formen der Mischung ermöglichen,
d) Formen der in Schritt c) erhaltenen Mischung, um einen Grünkörper zu erhalten,
e) Entfernen des Lösungsmittels und/oder der Bindemittel durch Wärmebehandlung und/oder Verwendung von Mikrowellen,
f) Brennen des Körpers bei einer Sintertemperatur zwischen 1.600 °C und 2.400 °C, um einen gesinterten porösen Körper zu erhalten.

2. Verfahren nach Anspruch 1, wobei der mittlere Partikeldurchmesser des ersten SiC-Pulvers weniger als 10 Mikrometer, vorzugsweise weniger als 5 µm, und sehr bevorzugt weniger als 1 µm beträgt.

3. Verfahren nach einem der vorstehenden Ansprüche, wobei der mittlere Partikeldurchmesser des zweiten SiC-Pulvers zwischen 5 und 50 µm und vorzugsweise zwischen 5 und 20 µm beträgt.

4. Verfahren nach einem der vorstehenden Ansprüche, wobei der mittlere Durchmesser der SiC-Partikel des zweiten Pulvers mindestens fünfmal so groß wie der mittlere Durchmesser der SiC-Partikel des ersten Pulvers und vorzugsweise mindestens zehn Mal so groß ist.

5. Verfahren nach einem der vorstehenden Ansprüche, wobei der Agglomerationsschritt b) unter Bedingungen durchgeführt wird, die die Herstellung von Granulaten mit einer Größe zwischen 5 und 200 µm, vorzugsweise zwischen 10 und 100 µm und sehr bevorzugt zwischen 10 und 50 µm ermöglichen.

6. Verfahren nach einem der vorstehenden Ansprüche, wobei in der Mischung aus Schritt c) der Granulatanteil zwischen 95 und 5 Gew.-% der Trockenmischung und vorzugsweise zwischen 90 und 10 Gew.-% der Trockenmischung ausmacht.

7. Verfahren nach einem der vorstehenden Ansprüche, wobei das erste SiC-Pulver aus mehreren Anteilen besteht, die sich durch den mittleren Durchmesser der sie bildenden Partikel unterscheiden, wobei einer der Anteile aus Partikeln besteht, deren mittlerer Durchmesser im Bereich von 1 bis 20 Mikrometern liegt, und ein anderer Anteil aus Partikeln nanometrischer Größe besteht.

8. Verfahren nach einem der vorstehenden Ansprüche, wobei das in den Schritten a) oder c) verwendete Bindemittel ausgewählt ist aus der Gruppe, bestehend aus duroplastischen Harzen, insbesondere Epoxid-, Silikon-, Polyimid-, Polyester- oder vorzugsweise Phenolharz, PVAs, die gegebenenfalls mit mineralischen oder organisch-mineralischen Bindemitteln oder einem Acrylharz kombiniert sind.

9. Verfahren nach einem der vorstehenden Ansprüche, wobei dem Bindemittel in den Schritten a) und/oder c) Dispergier- oder Entflockungsmittel zugesetzt werden.

10. Verfahren nach einem der vorstehenden Ansprüche, wobei der Agglomerationsschritt b) durch Zerstäuben oder Granulieren verwirklicht wird.

11. Verfahren nach einem der vorstehenden Ansprüche, wobei das Formen des Grünkörpers in Schritt d) durch Pressen, Extrudieren, Vibrieren oder durch Formen, Gießen unter Druck oder nicht, beispielsweise in porösen Gips- oder Harzformen, erreicht wird.

## Claims

1. A process for the manufacture of a sintered, SiC based, ceramic, refractory, and porous product, comprising the following steps:
a) mixing a first powder of SiC particles whose average diameter is less than 20 µm, in a solvent such as water and in the presence of a binder,
b) agglomeration of said particles to form granules whose average size is between 5 and 500 µm,
c) mixing of the granules resulting from step b) with a second powder of SiC particles whose average diameter is more than 5 µm and at least twice that of the first powder and in the presence of a solvent such as water and of a binder, in proportions adapted to allow the shaping of the mixture,
d) shaping of the mixture obtained in step c) to obtain a green body,
e) removing the solvent and/or binders by heat treatment and/or using microwaves,
f) baking the body at a sintering temperature between 1600°C and 2400°C to obtain a sintered porous body.

2. The process as claimed in claim 1, wherein the average diameter of the particles of the first SiC powder is less than 10 microns, preferably less than 5 µm, and very preferred less than 1 µm.

3. The process as claimed in one of the preceding claims, wherein the average diameter of the particles of the second SiC powder is between 5 and 50 µm and preferably between 5 and 20 µm.

4. The process as claimed in one of the preceding claims, wherein the average diameter of the SiC particles of the second powder is at least five times greater than the average diameter of the SiC particles of the first powder and preferably at least ten times greater.

5. The process as claimed in one of the preceding claims, wherein the agglomeration step b) is carried out under conditions making it possible to obtain granules whose size is between 5 and 200 µm, preferably between 10 and 100 µm and very preferred between 10 and 50 µm.

6. The process as claimed in one of the preceding claims, wherein in the mixture of step c), the granule fraction represents between 95 and 5% by weight of the dry mixture and preferably between 90 and 10% by weight of the dry mixture.

7. The process as claimed in one of the preceding claims, wherein said first SiC powder is formed of several fractions being different by the average diameter of the particles that form them, one of fractions being formed by particles whose average diameter is in the range from 1 to 20 microns, and another fraction being formed by particles of nanometric size.

8. The process as claimed in one of the preceding claims, wherein the binder used in steps a) or c) is selected from the group consisting of thermosetting resins, in particular epoxy, silicone, polyimide, polyester resins or preferably phenolic resin and PVA optionally associated with binders of the mineral or organo-mineral type or an acrylic resin.

9. The process as claimed in one of the preceding claims, wherein dispersants or deflocculants are added to the binder in steps a) and/or c).

10. The process as claimed in one of the preceding claims, wherein the step b) of agglomeration is carried out by atomization or by granulation.

11. The process as claimed in one of the preceding claims, wherein the shaping of the green body during step d) is obtained by pressing, extrusion, vibration or by molding, casting under pressure or not, for example in a porous plaster mold or resin.
